# EUROPÄISCHE PATENTANMELDUNG

(11) **EP 0 688 139 A2**
(43) Veröffentlichungstag der Anmeldung: **20.12.1995**
(21) Anmeldenummer: 95108879.8
(22) Anmeldetag: 09.06.1995
(51) Int. Cl.: H04Q 7/36, H04B 7/26, H04Q 7/30

(54) **Vorrichtung zum Erhöhen des Funktionsbereiches eines Systems digital arbeitender Schnurlostelefone**

(30) Priorität: 16.06.1994 CH 1898/94
(71) Anmelder: ASCOM BUSINESS SYSTEMS AG, CH-4503 Solothurn (CH)
(72) Erfinder: Rainer, Simon, CH-4512 Bellach (CH)
(74) Vertreter: Schwerdtel, Eberhard, Dr.

(57) **Zusammenfassung**

Ein System digital arbeitender Schnurlostelefone umfasst eine an das allgemeine Netz (11) angeschlossene Feststation (20) und mehrere frei bewegliche Mobilstationen (30.1-30.4). Der natürlich gegebene Funktionsbereich (22) des Systems kann durch eine Relaisstation (40) erweitert werden. Hierzu weist diese Relaisstation (40) Mittel auf, die es erlauben, von der Feststation (20) ankommende Übermittlungspakete unverändert zu weiteren Mobilstationen (30.5, 30.6) in einem zweiten Funktionsbereich (23) weiterzusenden. Umgekehrt sendet die Relaisstation (40) auch von den weiteren Mobilstationen (30.5, 30.6) ankommende Pakete entsprechend zur Feststation (20) weiter. Die Relaisstation (40) unterhält zu diesem Zwecke sowohl zur Feststation (20) als auch zu den weiteren Mobilstationen (30.5, 30.6) paarweise einander zugeordnete und zeitlich sehr eng gekoppelte Übermittlungskanäle im Sinne der DECT-Norm (Digital European Cordless Telecommunications).

## Beschreibung

Die Erfindung betrifft eine Vorrichtung und ein Verfahren zum Erhöhen des Funktionsbereiches eines Systems digital arbeitender Schnurlostelefone entsprechend dem Oberbegriff der unabhängigen Ansprüche.

Systeme von digital arbeitenden Schnurlostelefonen sind bekannt. Beispielsweise beschreibt die Schrift EP-A-0 399 611 ein derartiges System mit einigen an das allgemeine Netz angeschlossenen Primärstationen und einer Mehrzahl von mobilen Sekundärstationen. Einer Primär- und einer Sekundärstation steht entsprechend der DECT-Norm (Digital European Cordless Telephone) für eine digitale Sprachübertragung jeweils ein Duplexkanal zur Verfügung. Dieser Duplexkanal wird zeitmultiplexiert mit elf anderen Duplexkanälen von Verbindungsfall zu Verbindungsfall der jeweiligen Verbindung zwischen den genannten Stationen zugeteilt. Für die Übertragung von Daten ist es nun möglich, einen oder auch mehrere weitere, freie Kanäle einer gewünschten Datenverbindung zuzuteilen. Dies erlaubt eine entsprechend schnellere Übertragung. Zur Bewirtschaftung der Kanäle weisen die Stationen Listen auf, die jeweils angeben, welche Kanäle für den genannten Zweck der Datenübertragung verfügbar sind.

In der Telekommunikation ist es weiter seit jeher bekannt, bei Übertragungsanordnungen Relaisstationen einzusetzen, wenn die verlangte Reichweite die Möglichkeiten des primären Senders und/oder der Empfänger übertrifft. Derartige Relaisstationen regenerieren die zu übertragenden Signale und senden die regenerierten Signale auf eine jeweils weitere Übertragungsstrecke oder in ein von der Relaisstation zu versorgendes, gegenüber dem primären Gebiet erweitertes Empfangsgebiet aus.

Bei digitalen Schnurlostelefonen sind die Reichweiten generell geringer als bei entsprechenden, analog arbeitenden Telefonen. Dies stellt einen Nachteil digitaler Schnurlostelefone dar, der deren praktischen Einsatz einschränkt. Es ist daher die Aufgabe der vorliegenden Erfindung, diesen Nachteil zu beheben.

Die Lösung dieser Aufgabe ist durch den kennzeichnenden Teil von Anspruch 1 gegeben. Die abhängigen Ansprüche geben Ausgestaltungen der Erfindung an.

Im folgenden wird die Erfindung anhand von fünf Figuren beispielsweise näher beschrieben. Es zeigen:
Fig. 1 - Schema eines Systems von Schnurlostelefonen,
Fig. 2 - Schema zur Erklärung der DECT-Norm,
Fig 3 - Schema zur Erklärung der erfindungsgemässen Vorrichtung,
Fig. 4 - Blockschaltbild einer Relaisstation,
Fig. 5 - Weiteres Blockschaltbild einer Relaisstation.

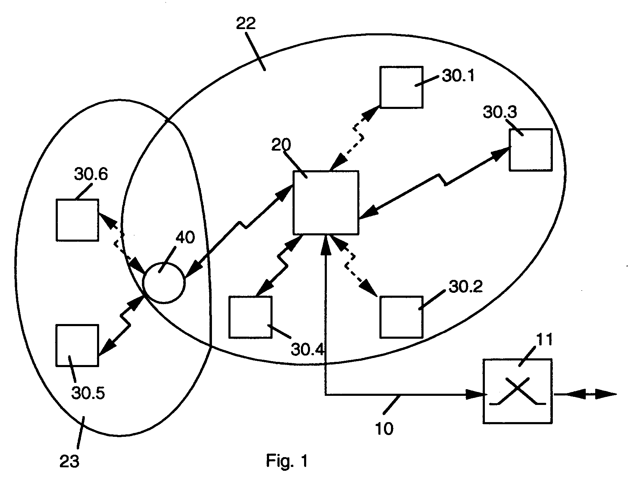

Fig. 1 zeigt das Schema eines Systems von Schnurlostelefonen. Dieses System umfasst beispielsweise eine einzige Fest- oder Basisstation 20, die über eine Telefonleitung 10 mit dem allgemeinen Telefonnetz verbunden ist. Dieses Netz wird durch eine Zentrale 11 dargestellt. Das System umfasst weiter eine Mehrzahl von tragbaren Mobilstationen bzw. Handgeräten, beispielsweise sechs Mobilstationen 30.1 bis 30.6. Die Mobilstationen 30.1 bis 30.4 und die Feststation 20 befinden sich innerhalb eines (ersten) Funktionsbereiches 22, beispielsweise einem Gebäude, innerhalb dessen sie miteinander kommunizieren können. Die Mobilstationen 30.5 und 30.6 befinden sich dagegen innerhalb eines zweiten Funktionsbereiches 23, beispielsweise einem Nebengebäude, von dem aus sie nur bedingt oder garnicht mit der Feststation 20 verkehren können.

Am Rande des ersten Funktionsbereiches 22 befindet sich eine Relaisstation 40. Diese Relaisstation sowie die Mobilstationen 30.1 bis 30.4 liegen wie beschrieben im Einflussbereich der Feststation 20 und sind mit dieser über Funk verbunden. Dies ist durch geknickte Doppelpfeile dargestellt, wobei bestehende Sprachverbindungen als ausgezogene Pfeile gezeichnet sind und potentielle Sprachverbindungen als gestrichelte Pfeile.

Die Mobilstationen 30.5, 30.6 befinden sich innerhalb des zweiten Funktionsbereiches 23 und im Reichweitebereich der Relaisstation 40. Sie sind durch Funk mit dieser Station 40 verbunden. Dies ist wiederum durch ausgezogene bzw. gestrichelte Pfeile dargestellt. Die Relaisstation 40 steht somit gleichzeitig sowohl mit der Feststation 20 als auch mit den Mobilstationen 30.5 und 30.6 in Funkverbindung.

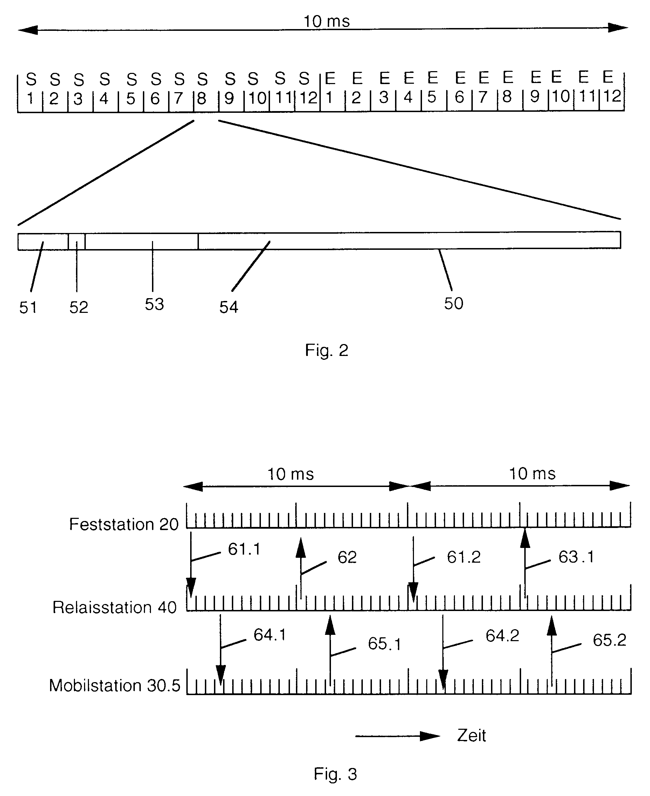

Fig. 2 zeigt das der DECT-Norm entsprechende Schema für die Übertragung zwischen den Stationen 20 und 30. Im Wiederholungsrhythmus von 10 Millisekunden folgen sich vierundzwanzig Zeitschlitze. Von diesen sind die ersten zwölf (S1 bis S12) für die eine Übertragungsrichtung und die zweiten zwölf (E1 bis E12) für die andere Übertragungsrichtung bestimmt. Jedem Zeitschlitz ist ein Paket 50 zugeordnet, das sich seriell aus einem Synchronisierungsteil 51, Zeichen 52 zur Spezifikation der Steuerdaten, eigentlichen Steuerdaten 53 und den zu übertragenden Sprachdaten 54, d.h. den Nutzdaten zusammensetzt. Damit bildet das DECT-Verfahren eine spezielle Art von Zeitmultiplex-Übertragung, wobei jedes Paket 50 auf einer von zehn möglichen Übertragungsfreguenzen übertragen wird.

Jede einem durchgezogenen Pfeil von Fig. 1 entsprechende Verbindung belegt zwei paarweise einander zugeordnete Zeitschlitze Sn und En (n = 1, 2, 3,...12), wobei eine oder zwei Übertragungsfrequenzen aus den genannten zehn möglichen Frequenzen für die Übertragung in die beiden Richtungen ausgewählt sind. Die Kombination der zwei Parameter Zeitschlitz-Paar und Übertragungsfrequenz(en) wird als Kanal bezeichnet und erlaubt eine Duplex-Sprachverbindung. Welcher der zwölf möglichen Kanäle im Einzelfall belegt wird und welche Übertragungsfrequenzen ausgewählt werden, hängt von der jeweiligen Situation ab und ist damit weitgehend offen. Es wird durch die Steuerdaten 53 aber dafür gesorgt, das niemals zwei Mobilstationen 30 gleichzeitig über einen gleichen Kanal mit der zugeordneten Feststation 20 kommunizieren. Die gestrichelten Pfeile von Fig. 1 entsprechen potentiellen, momentan nicht benutzten Kanälen.

Fig. 3 zeigt das Schema entsprechend Fig. 2 nochmals, jedoch auf die Hälfte verkleinert, mit zwei Periodenlängen von jeweils 10 Millisekunden und getrennt für die Feststation 20, die Relaisstation 40 und eine der Mobilstationen 30.5 oder 30.6. Die Zeitachse verläuft von links nach rechts.

Da grundsätzlich jeder Zeitschlitz nur für eine einzige Verbindung benützt werden kann, benötigt ein Duplexkanal zwischen der Feststation 20 und beispielsweise der Mobilstation 30.5 insgesamt zwei Kanäle der beschriebenen Art. Der erste Kanal dient dabei der Verbindung zwischen der Feststation 20 und der Relaisstation 40, der zweite Kanal zum Verbinden der Relaisstation 40 mit der Mobilstation 30.5. Hierbei müssen sowohl die beiden Zeitschlitze jeder Übertragungsrichtung als auch die Übertragungsrichtungen als solche zeitlich richtig aufeinanderfolgen. Diese Forderung bedingt die Verteilung der genannten Zeitschlitze bzw. der beiden Kanäle auf jeweils zwei Periodenlängen.

Als Beispiel zur besseren Erläuterung des im vorhergehenden Abschnitt Gesagten zeigt Fig. 3 links einen Pfeil 61.1, der ein Verbindungspaket von der Feststation 20 zur Relaisstation 40 im ersten Zeitschlitz S1 der ersten Periodenlänge symbolisiert. Diesem Pfeil 61.1 wäre an und für sich für die Gegenrichtung ein (gestrichelter) Pfeil 62 im dreizehnten Zeitschlitz zugeordnet. Wegen des beschriebenen Zeitrangs kann das durch diesen gestrichelten Pfeil 62 angedeutete Verbindungspaket erst im der nachfolgenden Periodenlänge übermittelt werden, also um eine Periodenlänge verzögert (Pfeil 63.1). Zeitlich vorher, das heisst im gewählten Beispiel im vierten Zeitschlitz S4 der ersten Periodenlänge gibt der Pfeil 64.1 ein Verbindungspaket von der Relaisstation 40 zur Mobilstation 30.5 an, dessen Inhalt dem Paket entsprechend Pfeil 61.1 entspricht. Diesem Verbindungspaket 64.1 entspricht für die Gegenrichtung Pfeil 65.1 im sechzehnten Zeitschlitz E4 der ersten Periodenlänge. Damit werden für die eine Übertragungsrichtung nacheinander die Zeitschlitze S1 und S4 der ersten Periodenlänge und für die andere Übertragungsrichtung nacheinander die Zeitschlitze E4 der ersten Periodenlänge und E1 der zweiten Periodenlänge verwendet. Die hierbei gegebenen Zeitverzögerungen, d.h. für den durch die Pfeile 61.1 und 63.1 symbolisierten einen Kanal, werden durch die Relaisstation 40 bewirkt und gesteuert. In jeder Periodenlänge wiederholen sich die Paketübertragungen, dargestellt durch die Pfeile 61.2, 64.2 und 65.2 in der zweiten Periodenlänge. Pfeil 63.2 fällt in die dritte Periodenlänge und ist daher nicht mehr dargestellt.

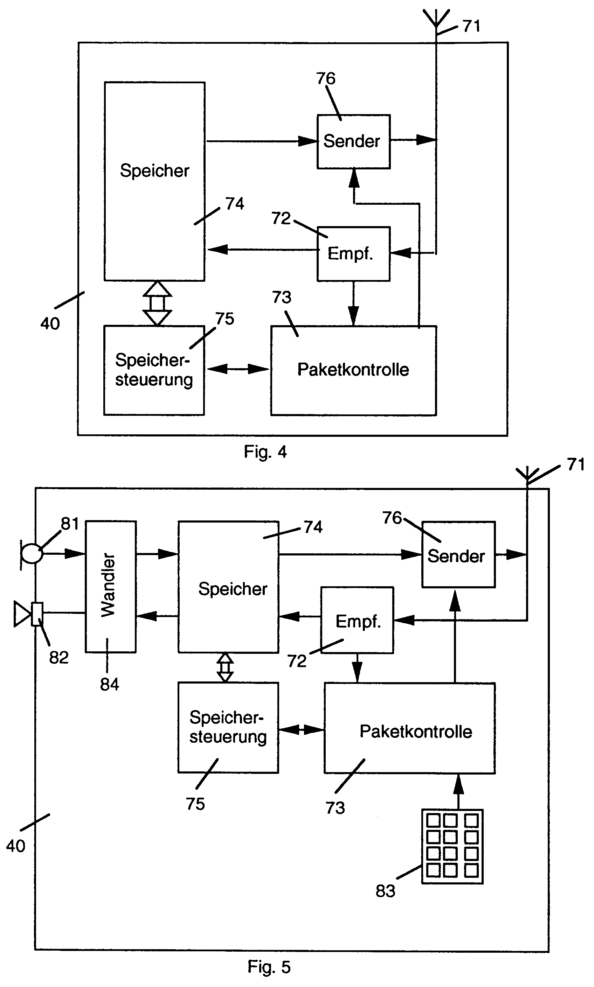

Fig. 4 zeigt ein Blockschaltbild der Relaisstation 40. Diese umfasst eine einzige Antenne 70 als Verbindungsglied zur Aussenwelt, d.h. zur Feststation 20 und zu den im zweiten Funktionsbereich 23 befindlichen Mobilstationen 30.5, 30.6. Sie unterhält über diese Antenne zwischen den genannten Stationen 20, 30.5, 30.6 jeweils zwei gekoppelte Kanäle in der vorgehend beschriebenen Art.

Die Relaisstation 40 umfasst weiter eine Empfangseinheit 72, eine Paketkontrolleinheit 73, einen Paketspeicher 74 mit zugeordneter Speichersteuerung 75 und eine Sendeeinheit 76. Die über die Antenne 70 mit unterschiedlichen Übertragungsfrequenzen ankommenden Pakete 50 werden durch die Empfangseinheit 72 empfangen und synchronisiert und durch die Paketkontrolleinheit 73 bezüglich ihrer Zeichen 52 und Steuerdaten 53 gelesen. Die Pakete 50 werden sodann, gesteuert durch die Speichersteuerung 75 in den Paketspeicher 74 zur Zwischenspeicherung eingelesen und zur gegebenen Zeit wieder zur Sendeeinheit 76 ausgelesen. Die Sendeeinheit bewirkt dann die Aussendung über die Antenne 70. Dies bedeutet nach der Funktion eine paarweise Kombination der oben genannten Kanäle zwischen der Feststation 20 und der Relaisstation 40 sowie der Kanäle zwischen der Relaisstation 40 und den im zweiten Funktionsbereich 23 befindlichen Mobilstationen 30.5, 30.6.

Der Aufbau und die Funktionsweise der Paketkontrolleinheit 73, der Speichersteuerung 75 und des Paketspeichers 74 sind im weiteren derart, dass jedes Paket 50 möglichst kurz gespeichert und exakt dem vorgesehenen Zeitschlitz zugeordnet wird. Die Sendeeinheit 76 wählt für jedes abgehende Paket 50 jeweils die richtige Übertragungsfrequenz, gesteuert durch die Paketkontrolleinheit 73. Welche Zeitschlitze und welche Übertragungsfrequenzen als Kanal jeweils ausgewählt werden, ergibt sich aus dem bekannten Verfahren des Verbindungsaufbaus entsprechend der DECT-Norm, das hier nicht behandelt wird.

Als Paketspeicher 74 kommt im Grunde jeder Schreib/Lesespeicher infrage, als Speichersteuerung 75 und als Paketkontrolleinheit 73 mit Vorteil eine gemeinsame Prozessorsteuerung.

Statt nach der exakten DECT-Norm kann die beschriebene Vorrichtung auch nach einer mehr oder weniger abgewandelten Zeitmultiplex-Methode arbeiten. Zum Beispiel ist es möglich, anstatt die Kanäle von Fall zu Fall immer wieder neu zu definieren, für die Verbindung zwischen der Feststation 20 und der Relaisstation 40 fixe Kanäle vorzusehen.

Die Relaisstation 40 bildet wie gezeigt eine eigenständige Einheit, die normaler Weise nur einen Netz- bzw. Speiseanschluss benötigt, jedoch keine kabelgebundene Verbindung zum Telekommunikationsnetz. Das macht die Installation einfach. Statt des Netzanschlusses kann auch ein Batteriebetrieb vorgesehen sein, was die Installation weiter erleichtert.

Fig. 5 zeigt eine Variante des Blockschaltbildes von Fig. 4. Diese Variante umfasst alle beschriebenen Einheiten 71 bis 76 in unveränderter Funktion. Dazu kommen ein Mikrofon bzw. eine Sprechkapsel 81, ein Lautsprecher bzw. eine Hörkapsel 82, eine Wähltastatur 83 und ein Wandler 84. Diese zusätzlichen Einheiten dienen dazu, der Relaisstation 40 zusätzlich zu ihrer beschriebenen Relaisfunktion zusätzlich die Funktionen einer Mobilstation 30 zu verschaffen. Die Paketkontrolleinheit 73 unterscheidet hierzu weiter, ob ein ankommendes Paket 50 für den internen Gebrauch bestimmt ist oder wie oben beschrieben nach Zwischenspeicherung zum externen Gebrauch wieder ausgesandt wird. Ist das Paket 50 als "intern" erkannt, dann wird es über den Speicher 74 zum Wandler 84 weitergegeben. Dieser wandelt die enthaltenen Sprachdaten 54 digital/analog und gibt das resultierende Ergebnis als Sprachsignal an die Hörkapsel 82 weiter.

In der anderen Richtung werden in der Sprechkapsel 81 entstehende Sprachsegmente durch den Wandler 84 digitalisiert und einem Paket 50 zugeordnet. Dieses wird über den Speicher 74, die Sendeeinheit 76 und die Antenne 71 ausgesandt. Die Tastatur 83 dient in gewohnter Art zum manuellen Auslösen bekannter Wählvorgänge.

Die Einrichtung entsprechend Fig. 5 lässt sich als mobile Relaistation 40 und/oder als Mobilstation 30 einsetzen. Sie ist im Aufwand jeder dieser Stationen vergleichbar und bildet daher eine preiswerte Möglichkeit für die Realisierung.

Der erste 22 und der zweite Funktionsbereich 23 können nebeneinander angeordnet sein ohne Überlappung. Die Bereiche können sich aber auch überlappen wie in Fig. 1 dargestellt.

In diesem Fall kann jeweils z.B. aufgrund der gegebenen Empfangsstärken entschieden werden, ob ein Kanal direkt oder unter Einbezug der Relaisstation 40 installiert werden soll.

Statt einer einzigen Relaisstation 40 können einer Feststation 20 natürlich auch zwei oder mehr Relaisstationen 40 zugeordnet sein, die unabhängige Ortsbereiche versorgen, die ausserhalb der normalen Reichweite zwischen der Feststation 20 und den Mobilstationen 30 liegen, d.h. ausserhalb des ersten Funktionsbereichs 22. Weiter können im Prinzip auch zwei oder mehr Relaisstationen 40 hintereinander geschaltet werden, um eine grössere Strecke zu überbrücken. Letzteres hat jedoch zwei gewichtige Nachteile. Der erste dieser Nachteile besteht darin, dass hierdurch weitere Kanäle blockiert werden, die nach der DECT-Norm eigentlich für separate Verbindungen verfügbar sein sollten. Der andere Nachteil ergibt sich durch die weiteren Verzögerungen in den zusätzlichen Relaisstationen 40. Dies kann massiv verschlechterte Übertragungsqualitäten bewirken, vor allem durch störende, zeitlich gestaffelte Echos der eigenen und der vom Gesprächspartner kommenden Sprache.

## Patentansprüche

1. Vorrichtung zum Erhöhen des Funktionsbereiches eines Systems digital arbeitender Schnurlostelefone mit einer Feststation (20) und mit dieser Feststation (20) zugeordneten, tragbaren Mobilstationen (30),
wobei die Feststation (20) und die jeweils aktiven Mobilstationen (30) über Kanäle verbunden sind, die im Sinne der DECT-Norm durch zeitmultiplexierte Pakete (50) und mehrere auswählbare Funkfrequenzen realisiert sind,
dadurch gekennzeichnet,
- dass am Rand desjeniges Gebietes (22), das dem eigentlichen Funktionsbereich des Systems entspricht, wenigstens eine Relaisstation (40) angeordnet ist,
- wobei jede Relaisstation (40) eine einzige Antenne (71) als Verbindungsglied nach aussen, eine der Antenne (71) nachgeschaltete Empfangseinheit (72) und eine Paketkontrolleinheit (73) zum Empfangen und zum Beurteilen aller ankommenden Pakete (50), einen Paketspeicher (74) mit zugeordneter Speichersteuerung (75) zum kontrollierten Zwischenspeichern aller Pakete (50) und eine der Antenne (71) vorgeschaltete Sendeeinheit (76) zum gesteuerten Wiederaussenden der Pakete (50) aufweist.

2. Vorrichtung nach Anspruch 1,
dadurch gekennzeichnet,
dass eine einzige Relaisstation (40) vorgesehen ist.

3. Vorrichtung nach Anspruch 1,
dadurch gekennzeichnet,
dass zwei oder mehr parallel zueinander arbeitende, unterschiedlichen Ortsbereichen zugeordnete Relaisstationen (40) vorgesehen sind.

4. Vorrichtung nach Anspruch 1,
dadurch gekennzeichnet,
dass eine Relaisstation (40) zusätzlich eine Sprechkapsel (81), eine Hörkapsel (82), eine Wähltastatur (83) und einen mit dem Paketspeicher (74) verbundenen Wandler (84) aufweist, durch welche Einheiten die Relaisstation (40) zusätzlich die Funktionen einer Mobilstation (30) besitzt.

5. Verfahren zum Betrieb einer Vorrichtung zum Erhöhen des Funktionsbereiches eines Systems digital arbeitender Schnurlostelefone mit einer Feststation (20), mit dieser Feststation (20) zugeordneten, tragbaren Mobilstationen (30) und mit wenigstens einer Relaisstation (40) entsprechend Anspruch 1,
dadurch gekennzeichnet,
- dass jede Relaisstation (40) mit der Feststation (20) und mit denjenigen Mobilstation (30.5, 30.6) jeweils einen Kanal unterhält, die (30.5, 30.6) sich im Reichweitebereich der Relaisstation (40) und ausserhalb desjenigen Gebietes (22) befinden, das dem eigentlichen Funktionsbereich des Systems entspricht,
- dass diese Kanäle zum Verbinden der Feststation (20) mit den genannten Mobilstationen (30.5, 30.6) durch die Relaisstation (40) paarweise kombiniert werden,
- dass die Relaisstation (40) alle auf diesen Kanälen ankommenden Pakete (50) kontrolliert und gesteuert so wieder aussendet, dass bei jedem Kanalpaar jeweils die zeitliche Reihenfolge der Pakete (50) dem Informationsfluss entspricht und nur eine minimale Zeitverzögerung auftritt,
- wobei ein Kanal im Sinne der DECT-Norm aus der Kombination zweier, einander zugeordneter Zeitschlitze und einer oder zwei von mehreren Übertragungsfrequenzen besteht,
- wobei alle Kanäle voneinander verschieden sind, und
- wobei jeder Zeitschlitz jeweils nur einmal belegt wird.

6. Verfahren zum Betrieb nach Anspruch 5,
dadurch gekennzeichnet,
dass die Kanäle von Fall zu Fall auf- und abgebaut werden.

7. Verfahren zum Betrieb nach Anspruch 5,
dadurch gekennzeichnet,
dass zwischen den Relaisstationen (40) und der Feststation (20) Kanäle fix installiert sind.
